Europäisches Patentamt

European Patent Office

Office européen des brevets

(11) Publication number: **0 052 886**
A1

# EUROPEAN PATENT APPLICATION

(21) Application number: 81109888.8

(22) Date of filing: 25.11.81

(51) Int. Cl.³: **B 29 F 3/08**
B 29 D 7/02

(30) Priority: 26.11.80 US 210734

(43) Date of publication of application:
02.06.82 Bulletin 82/22

(84) Designated Contracting States:
BE DE FR GB IT NL SE

(71) Applicant: UNION CARBIDE CORPORATION
Old Ridgebury Road
Danbury Connecticut 06817(US)

(72) Inventor: Jones, David Nunn
323 Pleasant Grove Road
Long Valley New Jersey 07853(US)

(74) Representative: Wuesthoff, Franz, Dr.-Ing. et al,
Patentanwälte Wuesthoff -v. Pechmann-Behrens-Goetz
Schweigerstrasse 2
D-8000 München 90(DE)

(54) Air ring lip extension for blowing film from olefin resins.

(57) Extruded molten resin tubes (3) are stabilized dimensionally by using an extended air ring lip (6) to direct the cooling medium at a propitious angle relative to the tube (3) outer surface.

FIG. I

EP 0 052 886 A1

PATENTANWALTE

WUESTHOFF - v. PECHMANN - BEHRENS - GOETZ

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2

12,828

00 5 2 8 86

- 1 -

## BACKGROUND OF THE INVENTION

This invention pertains to a process and apparatus for blowing film of a normally solid thermoplastic resin and particularly to a technique for controlling the stability of the extruded molten tube.

The technique of fabricating film from thermoplastic resins by extruding a molten tube of resin through a circular die and then blowing a bubble of said resin while simultaneously drawing the expanded tube onto a pickup roll means is old in the art. Orientation in the lateral and/or transverse directions may be effected in the process. It is common to cool the extruded tube by blowing air or other inert gas on the external surface of said tube to cool and thus harden the resin to a point where it is manageable and strong enough to stand the tension of the take up roll and the gas pressure on the internal surface of the extruded tube. The solidified tube is normally directed through flattening means such as a collapsing frame and a pair of rollers, which may be driven, and flattens the extruded film tube. Between the point of extrusion and the terminus of the flattening means, the film tube is inflated via air or a like gas to form and maintain a bubble. Driven nip rolls can be regulated to withdraw the molten tube of resin from the annular extrusion die at a speed greater than the extrusion speed. This in conjunction with lateral expansion of the molten film bubble, decreases the film thickness and orients the film in two directions.

With certain ethylene polymer resins having an extensional viscosity index equal to or less than about 4.5 weaknesses in the film wall may develop if the stability of the resin bubble is impaired, i.e. if the bubble shakes erratically.

Cooling of the inflated molten tubing has been achieved by internal or external cooling of the film bubble or both. Regardless of the method of cooling, the point at which the molten film bubble solidifies is referred to in the art on the "frost line".

It is preferred to cool the molten bubble from the outside.

U.S. Patent No, 3,548,042 discloses apparatus (and method) for cooling an extruded film bubble, comprising an annular-shaped air ring having an annular insert mounted therein such that cooling air blown into the air ring is divided into three components:

(1) a lowermost component directed perpendicularly against the film bubble just above the die orifice;

(2) an intermediate component which arises helically (clockwise) around and in contact with the film bubble; and

(3) an uppermost component which flows in a counter-clockwise direction in contact with the film bubble.

U.S. Patent No, 3,568,252 discloses an annular device for cooling a film bubble which comprises separate cooling chambers, each provided with slits for blowing cooling air against the film bubble, and an inflating chamber between the slits maintained at a reduced pressure by virtue of the suction created by blowing cooling air from the upper slit. The reduced pressure may be controlled by means of valved air-inlet tubes communicating between the open air and the inflation chamber. Alternatively, separate cooling rings may be provided, each having cooling air slits, the lower cooling ring being provided with an inflation chamber in which a reduced pressure is maintained by virtue of the suction created by the cooling air exiting from the slit in the upper cooling ring. The separate cooling rings are separated by another ring to prevent heat radiation.

However, none of the prior art cooling devices and systems has given satisfactory bubble stability with polyethylene and other olefin polymer resins having an extensional viscosity index equal to or less than about 4.5. This is reflected in lower outputs of blown film since the throughput or takeup rate must be slowed down to preclude tearing or rupturing of the thermoplastic film being drawn from the extrusion die. This problem is delineated on page 112 of Modern Plastics, June 1980 incorporated herein by reference.

It is therefor an object of this invention to provide a process for blowing film of a normally solid thermoplastic resin having an extensional viscosity index, $\leq$ 4.5. These are low strain hardening polymers. The extensional viscosity index is defined as the ratio of polymer extensional viscosity at a total Hencky strain of 2, to its viscosity at a total Hencky strain of 0.2, evaluated at a strain rate of 1.0 second $^{-1}$. This index is a measure of the degree to which the polymer exhibits strain-hardening (i.e., increase of viscosity with increasing strain). The polymers which exhibit an extensional viscosity index of no more than about 4.5 include the low pressure, low-density ethylene polymers described in commonly-assigned copending U.S. Applications Serial No. 892,322 filed March 31, 1978 (now abondoned) and Serial No. 12,720, filed February 16, 1979 still pending (a foreign filed application corresponding theret has still been published as European Patent Publication No. 4647).

The above-identified copending applications disclose a low pressure, gas phase process for producing low density ethylene copolymers having a wide density range of 0.91 to 0.94 g/cc and a melt flow ratio of from 22 to 36 and which have a relatively low residual catalyst content and a relatively high bulk density. The process comprises copolymerizing ethylene with one or more $C_3$ to $C_8$ alpha-olefin hydrocarbons in the presence of a high activity magnesium-titanium complex catalyst prepared under specific activation conditions with an organo aluminum compound and impregnated in a porous inert carrier material. The copolymers (as applied to these polymers, the term "copolymers" as used herein is also meant to include polymers of ethylene with 2 or more comonomers) thus prepared are copolymers of predominantly (at least about 90 mole percent) ethylene and a minor portion (not more than 10 mole percent) of one or more $C_3$ to $C_8$ alpha-olefin hydrocarbons which should not contain any branching on any of their carbon atoms which is closer than the fourth carbon atom. Examples of such alpha-olefin hydrocarbons are propylene, butene-1, hexene-1, 4-methyl pentene-1 and octene-1.

The catalyst may be prepared by first preparing a precursor composition from a titanium compound (.e.g, $TiCl_4$), a magnesium compound (e.g., $MgCl_2$) and an electron donor compound (e.g., tetrahydrofuran) by, for example, dissolving the titanium and magnesium compounds in the electron donow compound and isolating the precursor by crystallization. A porous inert carrier (such as silica) is then impregnated with the precursor such as by dissolving the precursor in the electron donor compound, admixing the support with the dissolved precursor followed by drying to remove the solvent. The resulting impregnated support may be activated by treatment with an activator compound (e.g., triethyl aluminum).

The polymerization process may be conducted by contacting the monomers, in the gas phase, such as in a fluidized bed, with the activated catalyst at a temperature of about 30 to 105°C. and a low pressure of up to about 1000 psi (e.g., from about 150 to 350 psi).
69 bar      10,35      24,15 bar

The tubular blown film extrusion process may be employed to form a film from low pressure-low density ethylene copolymers. For example, a process for forming film from one such low pressure-low density ethylene copolymer is disclosed in commonly-assigned, copending U.S.

0052886
12,828

Applications Serial No, 892,324, filed March 31, 1978 now abondoned and Serial No, 12,795, filed February 16, 1979 issued as U.S. 4,243,619 on January 6, 1981 (a foreign-filed application corresponding thereto has been published as European Patent Publication No. 6110). However, it has been found that the film production rates obtained in tubular film processes with low pressure-low density ethylene copolymers, utilizing conventional cooling devices and techniques are low compared to the rates achievable in commercial tubular blown film processes using conventional high pressure-low density polyethylene. Specifically, the properties of low pressure-low density ethylene copolymers are such that commercially desirable high film production rates have not been achieved without film bubble instability. Stated conversely, film bubble instability problems prevent the commercially desirable high film production rates from being obtained in blown film extrusion processes with low pressure-low density ethylene copolymers. The reason for such failures, it is believed, is the extensional behavior of low pressure-low density ethylene copolymers. In comparison to conventional high pressure-low density polyethylene, certain low pressure-low density ethylene copolymers are softer and exhibit less melt strength in extension. As a result, when these low pressure-low density copolymers are extruded from the die in a tubular blown film processes and are externally cooled by blowing air gainst the resin, the film bubble is unable to resist deformation caused by the increased cooling required by increased throughput rates. In other words, film bubble instability results at higher throughput rates since such rates require more heat transfer in the cooling process which is usually accomplished by increasing the amount and/or velocity of cooling air which in turn deforms the film bubble due to the extensional behavior of low pressure-low density ethylene copolymers.

## SUMMARY OF THE INVENTION

A process for blowing film of a normally solid thermoplastic resin having an extensional viscosity index $\leq 4.5$ has been found comprising extruding a molten tube of said resin through a circular die wherein the extruded molten tube is cooled with the aid of a cooling medium fed from one or more air rings, the improvement which comprises feeding the cooling medium from the lowest positioned air ring having an extended lip whereby said cooling medium exits from said ring at an angle of at least about 30° relative to the surface of the extruded molten tube upon which it impinges, wherein the tube is extruded at a rate of up to about 8.5 pounds of resin per inch of extruder die circumference per hour of extrusion time and whereby the molten tube is extruded and cooled in a stable manner free of erratic movements during extrusion.

## DESCRIPTION OF THE DRAWINGS

Fig. 1 is a cross-sectional view of an extrusion die and conventional air ring Fig. 1a is a plan view and Fig. 1b is a side view of the extended lip.

Fig. 2 is a perspective view of an air ring. Fig. 2a is a side cross-section view of the air ring. Fig 2a is a side cross-section view of the air ring.

DESCRIPTION OF THE PREFERRED EMBODIMENTS

The present invention by way of example is described by reference to low strain hardening polymers comprising low pressure polymerized-low density ethylene polymers. In a broader sense it is applicable to low strain hardening polymers having an extensional viscosity index of no more than about 4.5. Low pressure polymerized-low density ethylene copolymers are one example of such strain hardening polymers.

In the tubular blown film extrusion process, a molten polymer is extruded through an annular die to form a molten tube which, when inflated with pressurized gas, is referred to in the art as a film bubble. The film bubble is cooled and flattened and then usually wound flat on rolls. Optionally, the film tube may be slit before rolling. Film made by such a process may have a wide range of thicknesses depending upon the particular polymer and end use requirements. In the case of low pressure polymerized-low density ethylene copolymers, film thicknesses within the range of about 0.1 mil to $\overset{2,54\ /\text{um}}{}$ about 20 mils may be formed by tubular blown film $\overset{510\ /\text{um}}{}$ extrusion although most film formed of these copolymers will be within the range of about 0.5 mil to about 8 $\overset{12,7\ /\text{um}}{}$ $\overset{203}{}$ mils, preferably about 0.5 mil to about 2 mils. As in $\overset{/\text{um}}{}$ $\overset{12,7/\text{um}}{}$ $\overset{51\ /\text{um}}{}$ conventional tubular blown film extrusion processes, the film bubble is formed and maintained by inflating and maintaining a positive pressure of gas (e.g., air or nitrogen) inside the tubular film. The gas pressure is controlled to give the desired degree of expansion of the extruded tubular film. The degree of expansion, or so-called blowup ratio, as measured by the ratio of the fully expanded tube circumference to the circumference of the die annulus, may be within a range of about 1/1 to about 6/1 and preferably from about 1/1 to about 4/1.

As used herein, the language "low pressure-low density ethylene copolymers" means copolymers of at least about 90 mole percent ethylene with no more than about 10 mole percent of at least one $C_3$ to $C_8$ alpha-olefin hydrocarbon comonomer (e.g., propylene, butene-1, hexene-1, 4-methyl pentene-1 and octene-1) which are copolymerized under low pressure (e.g., 150 to 350 psi). Such copolymers normally have a density no greater than about 0.94 g/cc and typically their density is from about 0.91 to about 0.94 g/cc. In addition, such copolymers generally have a narrow molecular weight distribution range (Mw/Mn) of about 2.7 to 4.5 A specific example of one method for preparing such copolymers is more fully described in the aforementioned copending U.S. Application Ser. Nos. 892,322 now abandoned and 12,720, still pending and reference may be made to such applications for a more complete disclosure.

Conventional extrusion apparatus and techniques, applicable to low pressure-low density ethylene copolymers, may be employed in the present invention, e.g., commercially-available extruders, dies, flattening means, nip rolls and windup rolls, etc., may be used.  In
addition, various conventional additives such as slip
agents, antiblocking agents and antioxidants, may be
incorporated into the film in accordance with conventional
practice.

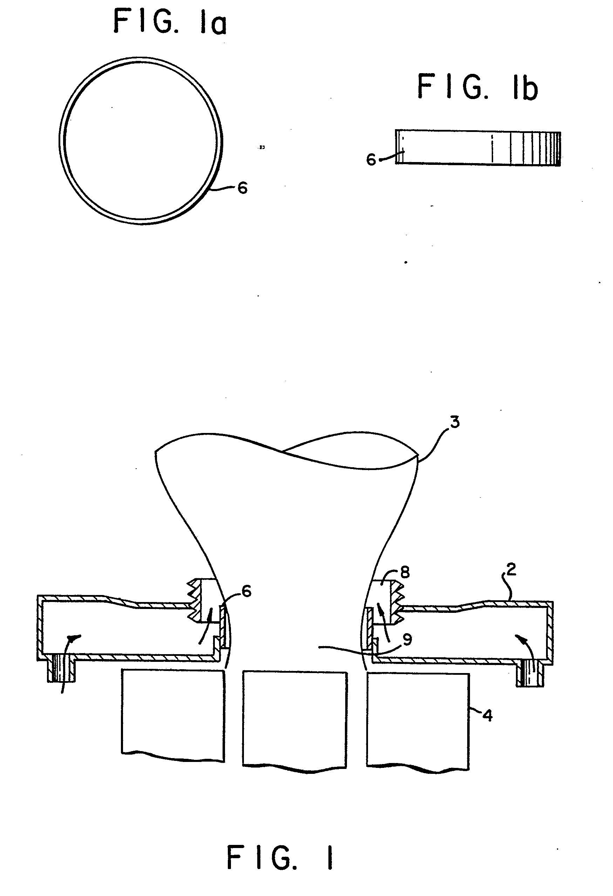

Referring now to the drawings in Fig. 1, air passes
through air ring 2, and inpinges on the outer surface
of an extruded tube 3, of polymer emerging upwardly from
annular die 4.  When extended lip, 6, is placed on
orifice 8, of ring 2 it forms an extension of air ring lip,
9, changing the angle at which the emerging air strikes the
surface of the emergin extruded tube 3 of polymer to one of
about $30^{\circ}$ relative to the film surface and the plane ring of
2.

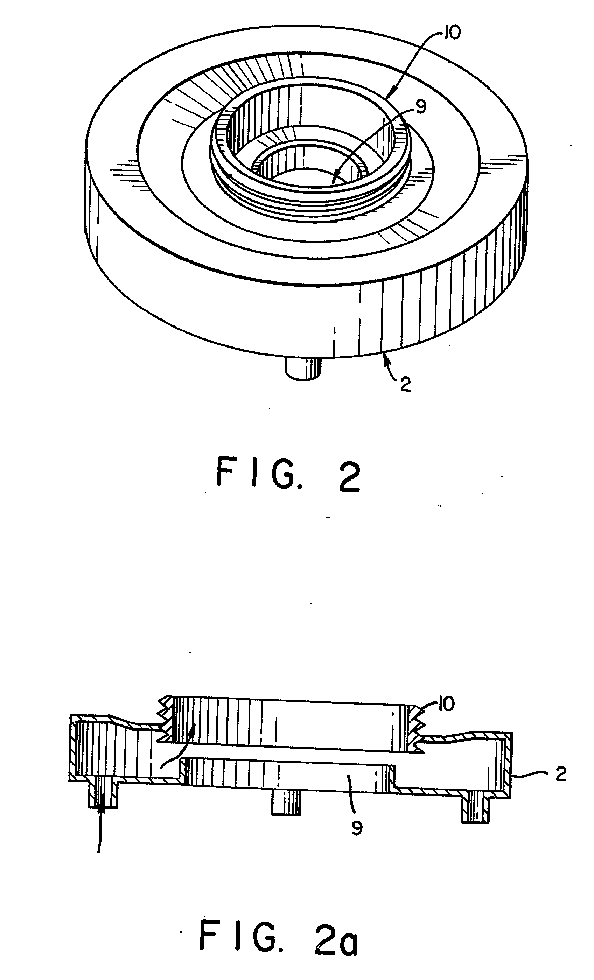

Fig. 2 shows the air ring 2, in greater detail fitted
with an adjusting ring 10.  The extended lip 6, can be
positioned inside the air ring lip, 9.

The invention is further described in the Example
and Control which follows.  All parts and percentages
are by weight unless otherwise specified.

A conventional polymer extruder having three heating
zones, 1, 2 and 3 was filled with an ethylene-butene
copolymer having a melt index of 3 and a density
of 0.920 plus 5% of polyethylene having a melt index of
2 grams/10 minutes and a density of 0.918.  The relative
temperature, pressure and other data are shown in the
Table below.  From these data it is apparent that the
extended lip modification of the air ring provided a
higher yield of extruded film than did the Control; The 151,8 kg/h·m relative amounts were 8.5 lbs./hr./inch of die circum-
132,2 kg/h·m
ference for the Example versus 7.4 lbs./hr/inch of die circumference for the Control. This is a significant

improvement.

TABLE

| EXTRUDER | CONTROL BASELINE | | EXAMPLE WITH EXTENDED LIP | |
|---|---|---|---|---|
| | Setpt. | Actual | Setpt. | Actual |
| Barrel Zone 1 | 240°F./ 115°C | 240°F. 115°C | 240°F. / 115°C | 240°F. 115°C |
| Barrel Zone 2 | 325°F / 162°C | 325°F. 162°C | 325°f. / 162°C | 325°F. 162°C |
| Barrel Zone 3 | 330°F./ 165°C | 335°F. 168°C | 330°F. / 165°C | 330°F. 165°C |
| Die Adaptor 1 | 350°F./ 176°C | 360°F. 183°C | 360°F. / 183°C | 360°F. 183°C |
| Die Zone 1 | 390°F./ 200°C | 390°F. 200°C | 390°F. / 200°C | 390°F. 200°C |
| Die Zone 2 | 390°F./ 200°C | 395°F. 202°C | 390°F. / 200°C | 390°F. 200°C |
| Melt. Temp. | 385°F. 195°C | | 385°F. 195°C | |
| Die Pressure | 4500 psi 3105 N/cm$^2$ | | 4500 psi 3105 N/cm$^2$ | |
| Rate | 139.4 lb./hr. 62,7 kg/h | | 160.2 lb./hr 72,1 kg/h | |
| Die Rate | 7.4 lb./hr/in of die circumference 132,2 kg/h·m | | 8.5 lb/hr.in of die circumference 151,8 kg/h·m | |
| Cooling Air Temp. | 60°F. 15°C | | 60°F. 15°C | |
| Die Gap | 0.060" 1,5 mm | | 0.060" 1,5 mm | |
| Resin | ethylene-butene copolymer 3 Melt Index - 0.920 Density + 5% high density polyethylene | | ethylene-butene copolymer 3 Melt Index - 0.920 Density + 5% high density poly-ethylene | |
| Air Ring | Victor Single Lip | | Victor Single Lip plus 1 1/8" Extended Lip 28,6 mm 63,5 mm | |
| Extruder | 63,5 mm 2 1/2" NRM - 16:1 Length of Barrel Diameter of Barrel (2 1/2" Diameter Barrel) 63,5 mm | | 2 1/2" NRM - 16:1 Length of Barrel Diameter of Barrel (2 1/2" Diameter Barrel) 63,5 mm | |

WHAT IS CLAIMED IS:

1. In a process for blowing a film of a normally solid thermoplastic resin having an extensional viscosity index of $\leq 4.5$ comprising extruding a molten tube of said resin through a circular die wherein the extruded molten tube is cooled with the aid of a cooling medium fed from one or more air rings, the improvement which comprises feeding the cooling medium from the lowest positioned air ring having an extended lip whereby said cooling medium exits from said ring at an angle of at least about 30° relative to the surface of the extruded molten tube upon which it impinges, and the plane of the air rings wherein the tube is extruded at a rate of up to about 151,8 kg/m 8.5 pounds of resin per inch of extruder die circumference per hour of extrusion time and whereby the molten tube is extruded and cooled in a stable manner free of erratic movements during extrusion.

2. Process claimed in claim 1 wherein the resin is an ethylene polymer.

0052886
EP-55 419

FIG. 1a

FIG. 1b

FIG. 1

0052886

FIG. 2

FIG. 2a

## 0052886

European Patent Office

**EUROPEAN SEARCH REPORT**

Application number

EP 81 10 9888.8

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | <u>BE - A - 866 726</u> (ATO-EMBALLAGE) <br> * claims 1,4,5; page 5, lines 30 to 34; fig. 1 * | 1,2 | B 29 F 3/08 <br><br> B 29 D 7/02 |
| A | <u>DE - A1 - 2 836 808</u> (DEMAG) <br> * claims 1,4; page 4, paragraph 1; page 5, paragraph 2; fig. * <br> & GB - A - 2 028 217 | 1 | |
| A | <u>US - A - 2 461 976</u> (B.H. SCHENK) <br> * claim 1; column 7, lines 8 to 53; fig. 3 * | 1,2 | TECHNICAL FIELDS SEARCHED (Int. Cl.³) <br><br> B 29 D 7/00 <br><br> B 29 F 3/00 <br><br> C 08 J 5/00 |
| A | <u>US - A - 3 764 251</u> (F. KONERMAN) <br> * fig. * | 1 | |
| A | <u>US - A - 3 210 803</u> (T.J. NAJAR) <br> * fig. 3 * | 1 | |
| A | <u>DE - A1 - 2 445 545</u> (WINDMÖLLER & HÖLSCHER) <br> * fig. 2 * | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 29-01-1982 | FINDELI |

EPO Form 1503.1 06.78